# EUROPÄISCHE PATENTSCHRIFT

(11) **EP 4 223 180 B1**
(45) Veröffentlichungstag und Bekanntmachung des Hinweises auf die Patenterteilung: **03.09.2025**
(21) Anmeldenummer: 23159046.4
(22) Anmeldetag: 28.02.2023
(51) Int. Cl.: A47B 57/40, A47B 96/06, A47B 96/14, A47B 47/04

(54) **REGALSYSTEM**
SHELF SYSTEM
SYSTÈME DE RAYONNAGE

(30) Priorität: 03.03.2022 DE 202022101188 U
(43) Veröffentlichungstag der Anmeldung: 09.08.2023
(73) Patentinhaber: ZARGES GmbH, 82362 Weilheim (DE)
(72) Erfinder: Soytürk, Erkan, 82362 Weilheim (DE); Mähler, Torsten, 01127 Dresden (DE)
(74) Vertreter: Schmid, Nils T.F.

(56) Entgegenhaltungen:
- JP-A- H1 156 489
- JP-A- H11 318 586
- US-A1- 2013 098 857

## Beschreibung

Die Erfindung betrifft ein Regalsystem.

Derartige Regalsysteme sind seit langem bekannt. Sie bestehen aus Holmen für die vertikale Abstützung von Regalbrettern oder anderen Lastaufnahmevorrichtungen wie Schubladen oder Teleskopzügen. Häufig ist es gewünscht, dass die Art der Lastaufnahmevorrichtungen variabel ist und an den Anwendungszweck angepasst werden kann. Beispielsweise ist für Teleskopzüge eine andere Verankerung an den Holmen nötig als bei Regalbrettern. Die Verankerung an den hinteren Holmen muss bei Teleskopzügen auch Kräfte in Aufwärtsrichtung aufnehmen können.

Wenn ein derartiges modulares System erwünscht ist, ist es sinnvoll, benachbarte Holme mit Verbindungsstreben miteinander zu verbinden. Eine belastbare Verbindung zwischen Holm und Verbindungsstrebe ist dann erwünscht. In vielen Fällen ist es zusätzlich erwünscht, dass die Verbindung lösbar ist. Eine lösbare Verbindung hat den Vorteil, dass Regale mit sich ändernden Anforderungen auch umgebaut werden können. Hierzu können dann z.B. unterschiedliche Verbindungsstreben eingesetzt werden, oder es wird eine Anzahl von Verbindungsstreben durch andere Lastaufnahmevorrichtungen ersetzt.

Bevorzugt ist die Verbindung werkzeuglos herstellbar und lösbar. Eine solche Art der Verbindung zwischen der Verbindungsstrebe und dem Holm ist insbesondere dann günstig, wenn ein Regal von einer einzigen Person aufgebaut oder umgebaut werden soll.

Häufig werden daher Steckverbindungen eingesetzt, bei denen die Verbindungsstrebe an oder auf einem Verbindungselement an dem Holm angesteckt oder aufgesteckt wird und dort gegebenenfalls einrastet.

Um eine Höhenanpassung zu ermöglichen, ist es seit langem bekannt geworden, die Holme mit Lochreihen zu versehen. Die Löcher weisen zueinander den gleichen Abstand auf. Durch das vorgegebene Rastermaß lassen sich dann beliebige Lastaufnahmevorrichtungen verwenden. Auch derartige Regalsysteme mit im Rastermaß angeordneten Lochreihen sind seit langem bekannt. Ein Beispiel hierfür ist die aus der DE 19 96 191 U1 bekannte Lösung. Die bislang bekannten Regalsysteme sind jedoch entweder wenig dauerhaltbar oder nicht flexibel genug oder sie lassen sich nicht einfach umbauen.

Aus US 2013/0098857 A1 ist ein Regalsystem mit einer Vielzahl von vertikalen Pfosten und horizontalen Streben bekannt. Die Streben sind mit den vertikalen Pfosten mittels zweiteiliger Profile, die an den vertikalen Pfosten angebracht sind, verbunden. Die Streben können auf einer oder auf beiden Seiten mit einem Pfosten gekoppelt sein. Aus JP H11318586 A ist ebenfalls ein Regalsystem bekannt, das zweiteilige Profile zum Verbinden von vertikalen Pfosten und horizontalen Streben umfasst. US 2013/098857 A offenbart insbesondere ein Regalsystem, mit Holmen und mit mindestens einer Verbindungsstrebe für die Verbindung von zwei zueinander benachbarten Holmen, wobei die Verbindungsstrebe an ihren Stirnseiten Aufnahmevorrichtungen aufweist, wobei an den Holmen des Regalsystems ein im Wesentlichen parallel zum Holm verlaufendes Hinterschnittprofil befestigt oder befestigbar ist, wobei jedes Hinterschnittprofil zwei oder mehr Profilteile aufweist, welche voneinander lösbar und unter Bildung je zueinander bündiger Flächen zusammenfügbar sind, wobei jedes Profilteil einen Vorsprung aufweist, wobei die Aufnahmevorrichtung der Verbindungsstrebe auf das Hinterschnittprofil in dessen zusammengefügtem Zustand aufschiebbar ist.

Daher liegt der Erfindung die Aufgabe zugrunde, ein Regalsystem zu schaffen, das eine gute Dauerhaltbarkeit mit großer Flexibilität und der Möglichkeit, einen einfachen Umbau vorzunehmen, kombiniert.

Diese Aufgabe wird erfindungsgemäß durch einen Gegenstand nach dem Anspruch 1 oder 15 gelöst. Vorteilhafte Weiterbildungen ergeben sich aus den Unteransprüchen.

In einer technisch vorteilhaften Ausführungsform des Regalsystems sind die Aufnahmevorrichtungen im Schnitt parallel zur Verbindungsstrebe C-förmig ausgebildet und bilden ein C-Profil, und die Hinterschnittprofile bilden im Schnitt parallel zur Verbindungsstrebe ein T-Profil, und das C-Profil passt mit spielfreier Passung, ggf. mit einer Passung unter Vorspannung, auf das T-Profil.

In einer weiteren technisch vorteilhaften Ausführungsform des Regalsystems weisen die Aufnahmevorrichtungen an einem Ende - parallel zum Holm betrachtet - einen Anschlag auf, mit welchem insbesondere eine Weiterbewegung des Hinterschnittprofils in der Aufnahmevorrichtung gesperrt ist.

In einer weiteren technisch vorteilhaften Ausführungsform des Regalsystems weist jedes Hinterschnittprofil zwei oder mehr Profilteile auf, welche voneinander lösbar und unter Bildung zueinander bündiger Abschlussflächen und/oder zueinander bündiger Seitenflächen und/oder zueinander bündigen Querflächen zusammenfügbar sind.

In einer weiteren technisch vorteilhaften Ausführungsform des Regalsystems fixiert das Zusammenfügen der Profilteile diese mit ihren Vorsprüngen in Löchern des Holmes, insbesondere benachbarten Löchern.

In einer weiteren technisch vorteilhaften Ausführungsform des Regalsystems sind die Profilteile für das Zusammenfügen und für das Lösen gegeneinander verschwenkbar, insbesondere jedes Profilteil um den Vorsprung und um eine Achse, die sich quer zum Holm erstreckt.

In einer weiteren technisch vorteilhaften Ausführungsform des Regalsystems weist jedes Profilteil eine konvexe Fläche und eine von der konvexen Fläche beabstandete konkave Fläche auf, und die konvexe Fläche eines Profilteiles weist einen Krümmungsradius auf, der dem Krümmungsradius der konkaven Fläche des anderen Profilteiles entspricht.

In einer weiteren technisch vorteilhaften Ausführungsform des Regalsystems weisen die Profilteile Klemmelemente auf, über welche sie aneinander einrasten, und sind die Profilteile unter Überwindung der Rastkraft voneinander trennbar.

In einer weiteren technisch vorteilhaften Ausführungsform des Regalsystems sind die Profilteile einander formgleich.

In einer weiteren technisch vorteilhaften Ausführungsform des Regalsystems ist in dem aufgeschobenen Zustand der Aufnahmevorrichtung auf das Hinterschnittprofil das Lösen und/oder Verschwenken der Profilteile gesperrt.

In einer weiteren technisch vorteilhaften Ausführungsform des Regalsystems besteht der Vorsprung aus einem insbesondere runden und flachzylindrischen zapfförmigen Mittenbereich und einem sich aus diesem heraus erstreckenden und für das Hintergreifen der Wand des Holms bestimmten sperrzungenartigen Endbereich.

In einer weiteren technisch vorteilhaften Ausführungsform des Regalsystems weist die Sperrzunge Abmessungen auf, die kleiner als der Durchmesser eines Lochs sind und ist die Sperrzunge endseitig gebogen, läuft insbesondere halbkreisförmig aus.

In einer weiteren technisch vorteilhaften Ausführungsform des Regalsystems ist der Vorsprung bei Schrägstellung des Profilteiles zum Holm in das Loch einführbar und aus diesem herausziehbar und bei zum Holm paralleler Ausrichtung des Profilteiles ist das Einführen und das Herausziehen gesperrt.

In einer weiteren technisch vorteilhaften Ausführungsform des Regalsystems weist die Aufnahmevorrichtung mindestens eine Rastzunge auf, die in eine Rastkerbe des Hinterschnittprofils eingreift und das Lösen der Aufnahmevorrichtung von dem Hinterschnittprofil nur unter Überwindung einer Rastkraft ermöglicht.

Erfindungsgemäß ist es vorgesehen, dass die Verbindung zwischen Verbindungsstrebe und Holm über ein Hinterschnittprofil bereitgestellt wird, das einen besonderen Aufbau hat.

Das Profil besteht aus zwei Profilteilen oder gegebenenfalls aus mehr als zwei Profilteilen, die voneinander lösbar sind und im zusammengefügten Zustand sich zueinander bündig erstrecken. Das bedeutet, dass mindestens die für die Verbindungsaufgabe wichtigen Flächen der Profilteile des Profils sich zueinander bündig erstrecken. Jedes Profilteil weist mindestens einen Vorsprung auf, der in ein Loch des Holms einführbar ist.

Beim Einführen des Vorsprungs in das Loch ist das Profilteil getrennt von dem anderen Profilteil. Beide Profilteile werden zunächst mit ihren Vorsprüngen in die je passenden Löcher des Holms eingeführt. Für das Einführen erstrecken sich die beiden Profilteile schräg zueinander oder zumindest schräg zum Holm. Wenn die Vorsprünge vollständig eingeführt sind, werden die beiden Profilteile aufeinander zu geschwenkt. Sie erstrecken sich dann parallel zum Holm und rasten bevorzugt aneinander ein. In diesem Zustand sind die vorstehend genannten Flächen der Profilteile bündig zueinander.

Aufgrund der Bündigkeit wirkt das zweiteilige Hinterschnittprofil wie ein einstückiges Profil. Eine Aufnahmevorrichtung der Strebe lässt sich auf die Hinterschneidung aufschieben. Die Aufnahmevorrichtung umgibt dann beide Profilteile und stellt damit sicher, dass diese in der bündig zueinander ausgerichteten Position bleiben.

Bevorzugt erfordert das Aufschieben eine gewisse Kraft, bevorzugt eine Kraft nach unten. Die Aufnahmevorrichtung und das Hinterschnittprofil sind in dem verbundenen Zustand in Presspassung zueinander und gegebenenfalls zusätzlich aneinander eingerastet.Die Verbindungsstrebe erstreckt sich bevorzugt in an sich bekannter Weise senkrecht zum Holm. Wenn der Holm auf einem waagerechten Boden steht, also waagerecht.

Unter dem Begriff "Hinterschneidung" oder "Hinterschnitt-" ist hier eine beliebige Formgebung zu verstehen, die sicherstellt, dass die Verbindungsstrebe ein Profilteil hintergreift, also nicht einfach von diesem in ihrer Erstreckungsrichtung abgezogen werden kann. "Profil" bedeutet hier, dass die Form in einer Richtung (= der Profilrichtung) betrachtet einen konstanten oder wenigstens von der Funktion her konstanten Querschnitt aufweist. Ein solches Profil ist auch dann gegeben, wenn Profilteile - in Profilrichtung betrachtet - in einem nicht die Funktion beeinträchtigenden Bereich einen Rücksprung aufweisen, oder z.B. einen Schlitz, wie er sich beim Anliegen von Teilen aneinander fertigungsbedingt und toleranzbedingt nahezu immer ergibt.

Bevorzugt weist die Verbindungsstrebe an ihren beiden Enden Aufnahmevorrichtungen auf. Die Aufnahmevorrichtungen passen je auf Hinterschnittprofile, die an einander benachbarten Holmen an den Seiten angebracht sind, die aufeinander zu weisen. Die Verbindungsstrebe wird nun so auf die beiden Hinterschnittprofile aufgesetzt, dass diese in die Aufnahmevorrichtungen eindringen können.

Durch eine gleichmäßige Kraft nach unten, die auf die Verbindungsstrebe aufgebracht wird, gleiten die Aufnahmevorrichtungen auf die Hinterschnittprofile auf, und zwar so, dass diese vollständig in den Aufnahmevorrichtungen aufgenommen sind. Bevorzugt sind die Vorsprünge so angeordnet, dass sie sich in einander benachbarte Löcher hinein erstrecken können, aber voneinander divergieren. Hierzu erstrecken sie sich je an den voneinander weg weisenden Enden der beiden Profilteile von diesen ausgehend Richtung Holm. Sie bilden an dieser Stelle je einen Absatz aus.

Im montierten Zustand erstreckt sich der größte Bereich jedes Profilteils außerhalb des Holms. Er liegt an dem Holm außen an. Ein mittlerer Bereich jedes Profilteils erstreckt sich in dem Loch des Holms und der Endbereich jedes Profilteils erstreckt sich im Inneren des Holms. Der Absatz an dem Endbereich hintergreift den Holm und liegt an diesem innen an.

Jedes Profilteil lässt sich aus dem Loch lediglich dann entnehmen, wenn es von dem Holm abgeschwenkt wird. Wenn beide Profilteile sich zueinander erstrecken, sind sie aneinander verrastet oder verklemmt. Es bedarf dann einer Lösekraft und, um diese Verbindung zu lösen. Das Lösen erfolgt dadurch, dass die Profilteile im Uhrzeigersinn weggeschwenkt werden, je weg von dem je anderen Profilteil.

Das Wegschwenken erfolgt um den mittleren Bereich des Profilteiles. Dieser erstreckt sich durch das Loch des Holms hindurch. Wenn die Profilteile ausreichend voneinander getrennt sind, also frei von einander beweglich sind, können sie abgeschwenkt werden. Hierbei sei unter "Abschwenken" eine Schwenkbewegung senkrecht zum Wegschwenken zu verstehen.

Für das Lösen des Hinterschnittprofils von dem Holm ist es zunächst erforderlich, eine etwaige dort montierte Verbindungsstrebe zu entfernen.Dies ist die Voraussetzung dafür, dass die Profilteile voneinander weg geschwenkt werden können.

Im nächsten Schritt wird die Klemmverbindung oder Rastverbindung beider Profilteile aneinander gelöst. Wenn beide Profilteile voneinander getrennt sind, werden sie nacheinander oder gleichzeitig von dem Holm abgeschwenkt und können dann aus dem Loch des Holms entnommen werden.

Die Montage erfolgt in der umgekehrten Reihenfolge. Beide Profilteile werden mit ihren Vorsprüngen je in einander benachbarte Löcher des Holms eingeführt und an den Holmen angelegt. In dieser Position erstrecken sie sich noch voneinander beabstandet. Sie werden dann aufeinander zu geschwenkt, bis sie aneinander verrasten oder klemmen. In dieser Position ist die Auszugssicherheit gewährleistet.

Zu einem beliebigen späteren Zeitpunkt kann dann eine Verbindungsstrebe wie zuvor beschrieben aufgesetzt und an dem Holm über das Profil sicher verankert werden. Wie sich aus dem Vorstehenden ergibt, muss gewährleistet sein, dass jedes Profilteil um den Vorsprung herum in dem Loch des Holms schwenkbar ist. Bevorzugt ist das Loch kreisrund und der Mittenbereich des Profilteils ebenfalls kreisrund. Beliebige andere Formen, die die Schwenkbarkeit sicherstellen, sind möglich.

Das Hinterschnittprofil passt in spielfreier Passung in die Aufnahmevorrichtung der Verbindungsstrebe. Bevorzugt sind die relativen Abmessungen der aneinander anliegenden Flächen dieser beiden so gewählt, dass ein Aufschieben mit einer gewissen Kraft, der Aufschiebekraft, möglich ist. Auch ein Lösen ist unter Aufbringung einer gewissen Kraft, der Lösekraft, möglich.

Das Hinterschnittprofil und die Aufnahmevorrichtung stehen in Reibverbindung zueinander. Typischerweise ist die Haftreibung etwas größer als die Gleitreibung, so dass die Lösekraft die Aufschiebekraft übersteigt. Die relativen Abmessungen bestimmen auch die Größe dieser beiden Kräfte, die sich in weiten Bereichen an die Erfordernisse anpassen lassen, z.B. zwischen 10 KN und 500 KN. Die Reibverbindung kann in beliebiger geeigneter Weise realisiert werden.

Die Verbindung ist als Schiebeverbindung ausgelegt. Aufgrund der Schiebeverbindung lassen sich beide Elemente nur in exakt einer Richtung zueinander verschieben. Diese Richtung ist bevorzugt die vertikale Richtung, also die Richtung, in der sich der Holm erstreckt.

Durch eine Abwärtsbewegung lässt sich die Verbindungsstrebe auf das Hinterschnittprofil aufschieben, und durch eine Aufwärtsbewegung wieder lösen. Im Querschnitt betrachtet passen die beiden Elemente zueinander. Beispielsweise kann die Aufnahmevorrichtung einen C-förmigen Querschnitt und das Hinterschnittprofil einen T-förmigen Querschnitt aufweisen, welche Querschnitte zueinander passen.

Typischerweise sind die Löcher der Holme in einem vorgegebenen Rastermaß angeordnet. Die beiden Vorsprünge eines Hinterschnittprofils sind in einem solchen Abstand voneinander angeordnet, dass sie in einander benachbarte Löcher eingreifen können. Es ist aber auch möglich, den Abstand zu einem beliebigen Vielfachen zu wählen.

Aufgrund der Rasteranordnung lässt sich die Strebe jedenfalls an einer beliebigen Höhenposition an dem Holm befestigen. Es lässt sich auch eine beliebige Anzahl von Streben über die Höhe des Holmes verteilt anbringen. Bevorzugt sind ein hinterer Holm und ein vorderer Holm über Feststreben miteinander verbunden. Die Feststreben sind bevorzugt an ihren Enden mit je einem vorderen Holm und einem hinteren Holm verschraubt. Pro Holmpaar sind bevorzugt zwei Feststreben vorgesehen. Die Anordnung aus einem vorderen Holm und einen hinteren Holm und den mindestens zwei diese verbindenden Feststreben bildet eine Regalwange.

Einander benachbarte Regalwangen lassen sich mit den Verbindungstreben lösbar miteinander verbinden. Dies gilt sowohl für einander benachbarte hintere als auch für einander benachbarte vordere Holme.

Die Ausgestaltung der Verbindung zwischen Holm und Verbindungsstrebe hat einen besonderen Vorteil: Ein erfindungsgemäßes Regalsystem lässt sich ohne weiteres von einem einzigen Monteur aufbauen. Der Monteur nimmt sich zwei Regalwangen und eine Verbindungsstrebe zur Hand. Er rastet die Verbindungsstrebe nach Montage des Formschlussprofils an einer Regalwange ein, bevorzugt am vorderen Holm.

Er hält die feste Kombination aus einer Regalwange und Verbindungsstrebe mit einer Hand an der Verbindungsstrebe fest. Mit der anderen Hand nimmt er die andere Regalwange und rastet ebenfalls nach Montage des Formschlussprofils die Verbindungsstrebe mit ihrem freien Ende an der anderen Regalwange ein.

Damit erhält er ein stehfestes Grundelement oder Segment des Regals, an das sich andere Elemente des Regals beliebig anbauen lassen. Möglich wird diese Montage Vereinfachung dadurch, dass die Montage der Verbindungsstrebe an dem Holm eine einfache Schiebebewegung von oben nach unten ist. Diese kann zudem an beiden Enden der Verbindungsstrebe gleichzeitig erfolgen, und zwar sogar mit einer Hand.

Hierzu fasst der Monteur die Verbindungsstrebe in der Mitte an und zieht nach unten, so dass eine gleichmäßige Kraft an beiden Enden die Verbindungsstrebe an jedem Ende einrasten lässt. Aufgrund der der Verbindung innewohnenden Vorspannung ist die Verbindung zudem so fest, dass eine ausreichende Stabilität gegen eine Kippbewegung oder dergleichen vorliegt.

Es ist bevorzugt, dass die Aufnahmevorrichtung in aufgeschobenem Zustand an dem Hinterschnittprofil einrastet.Hierzu sind am oberen Ende der Aufnahmevorrichtung zwei Rastzungen ausgebildet, die aufeinander zu weisen und vorgespannt sind und an dem Hinterschnittprofil einrasten, sobald es die Endposition erreicht hat.

Bevorzugt weisen die Profilteile Klemmelemente auf, die es ermöglichen, dass beide Profilteile unter Bildung des Hinterschnittprofils aneinander klemmen oder aneinander einrasten. In diesem Zustand erstrecken sich verschiedene Flächen der Profilteile bündig zueinander, so dass die Profilteile ein Gesamtprofil bilden.

Bevorzugt sind die Profilteile im Spritzgussverfahren hergestellt und bestehen aus Kunststoff. Einander zugewandte Flächen der Profilteile weisen Radien auf, sind also entweder konvex oder konkav an der Stelle, an der an dem einen Profilteil eine konvexe Fläche vorliegt und an dem anderen Profilteil eine konkave Fläche vorliegt.

Die konvexen und die konkaven Flächen sind gegeneinander versetzt, und zwar bevorzugt sowohl in der Höhe, also im Abstand vom Holm, als auch im Abstand vom Vorsprung. Dies ermöglicht es, dass beide Profilteile zueinander formgleich sind, also mit dem gleichen Spritzgusswerkzeug hergestellt werden können.

Die Klemmelemente können aus Bereichen bestehen, an denen einander benachbarte Flächen der Profilteile in Presspassung aneinander anliegen. An diesen Bereichen können auch kleine Wellen oder Zacken im Material vorliegen, die die Klemmung oder Rastung verbessern, aber unter Ausübung der Klemmkraft überwindbar sind.

Weitere Einzelheiten, Vorteile und Merkmale ergeben sich aus der nachfolgenden Beschreibung eines Ausführungsbeispiels der Erfindung anhand der Zeichnung.

Es zeigen:
- Fig. 1: eine schematische perspektivische Zeichnung eines Teils eines erfindungsgemäßen Regalsystems, unter Darstellung eines Teils des Holms, der Feststrebe, der Verbindungsstrebe und der Profilteile des Hinterschnittprofils, in einer Ausführungsform der Erfindung;
- Fig. 2: eine gegenüber Fig. 1 vergrößerte Darstellung der Profilteile, die in Ausnehmungen des Holms eingesetzt sind;
- Fig. 3: eine perspektivische Darstellung der Profilteile in dem Zustand, in dem sie aufeinander zu geschwenkt sind und das Hinterschnittprofil bilden;
- Fig. 4: eine Darstellung des Aufschiebevorgangs der Verbindungsstrebe auf das Hinterschnittprofil;
- Fig. 5: eine perspektivische Darstellung eines Teils des erfindungsgemäßen Regalsystems in der gleichen Ausführungsform, mit auf das Hinterschnittprofil aufgesetzter Verbindungsstrebe;
- Fig. 6: einen Schnitt durch das aus den beiden Profilteilen bestehende Hinterschnittprofil, in dem Zustand, in dem es in Eingriff mit dem Holm ist;
- Fig. 7: eine perspektivische Ansicht der beiden Profilteile; und
- Fig. 8: einen horizontalen Schnitt durch einen Holm, mit über das Hinterschnittprofil und die Aufnahmevorrichtung an diesem befestigter Verbindungsstrebe.

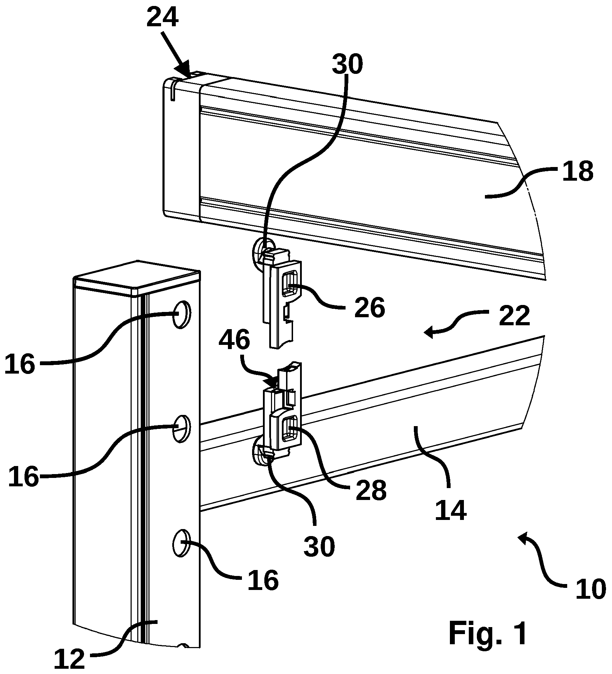

Aus Fig. 1 ist ein Regalsystem 10 in einem kleinen Ausschnitt ersichtlich. Das Regalsystem 10 weist vier Holme auf, von denen ein vorderer Holm 12 aus Fig. 1 ersichtlich ist. Der Holm 12 ist mit einem hinteren Holm, der nicht dargestellt ist, über eine Feststrebe 14 verbunden. Die Verbindung kann in beliebiger geeigneter Weise erfolgen und beispielsweise über eine Verschraubung. Der Holm 12 weist eine Mehrzahl von

Löchern 16 auf, die übereinander angeordnet sind, und zwar im Rastermaß, also im gleichen Abstand zueinander. An dem Holm 12 soll eine Verbindungsstrebe 18 lösbar befestigt werden. Hierzu dient eine erfindungsgemäße Verbindung. Diese besteht aus einer Aufnahmevorrichtung 20 und einem Hinterschnittprofil 22.

In Fig. 1 ist der Zustand dargestellt, bevor die Verbindung hergestellt ist. Die Aufnahmevorrichtung 20 ist mit der Verbindungsstrebe 18 fest verbunden, beispielsweise durch eine Verschraubung. Die Aufnahmevorrichtung 20 besteht bevorzugt aus Kunststoff und ist ein Spritzgussteil.

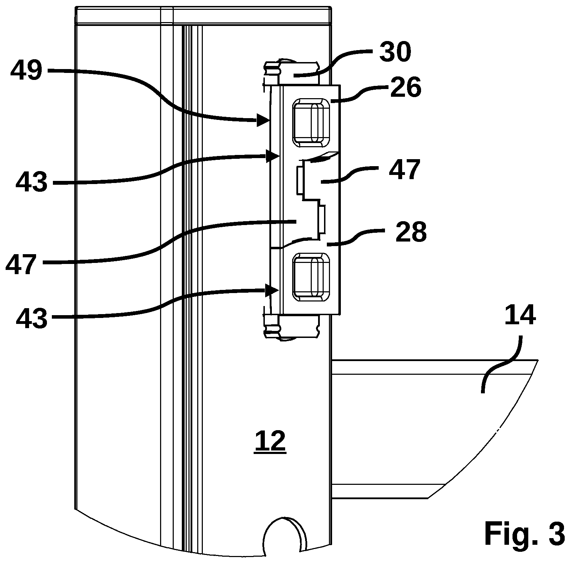

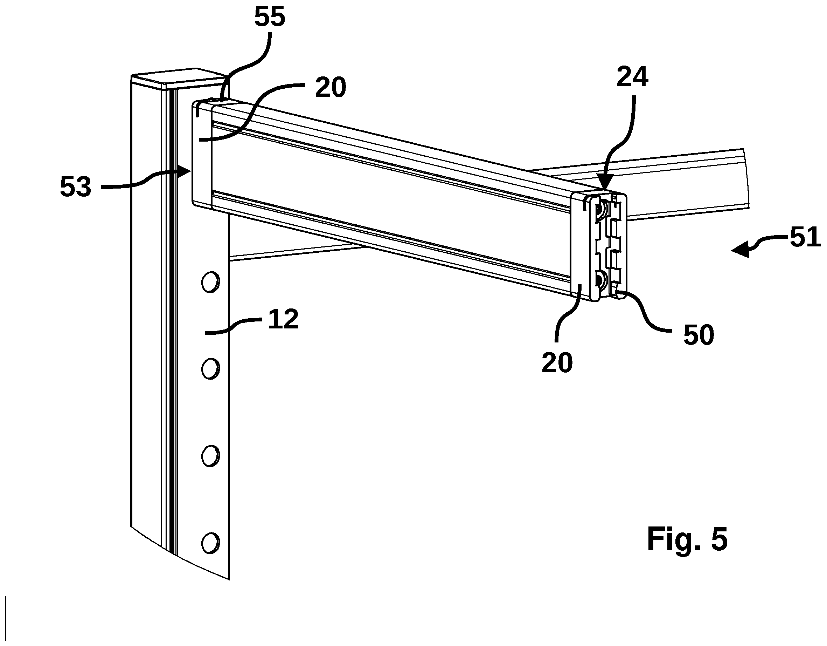

Sie weist einen sich vertikal erstreckenden Schlitz 24 auf, der Teil eines C-förmigen Querschnitts ist. Dies ist auch aus Fig. 5 ersichtlich. Vertikal bedeutet hier parallel zum Holm 12 und senkrecht zur Verbindungsstrebe 18. Passend zum C-förmigen Querschnitt der Aufnahmevorrichtung 20 weist das Hinterschnittprofil 22 einen T-förmigen Querschnitt auf. Dieser ist auch bereits aus Fig. 1, aber noch etwas besser aus Fig. 3 ersichtlich.

Das Hinterschnittprofil 22 besteht aus einem Profilteil 26 und einem Profilteil 28. Beide Profilteile sind zueinander formgleich. Sie weisen die Vorsprünge 30 auf. Der Vorsprung 30 des Profilteils 26 erstreckt sich schräg nach oben, in der Darstellung gemäß Fig. 1 zum Holm 12 hin, und der Vorsprung 30 des Profilteils 28 erstreckt sich schräg nach unten, zum Holm 12 hin.

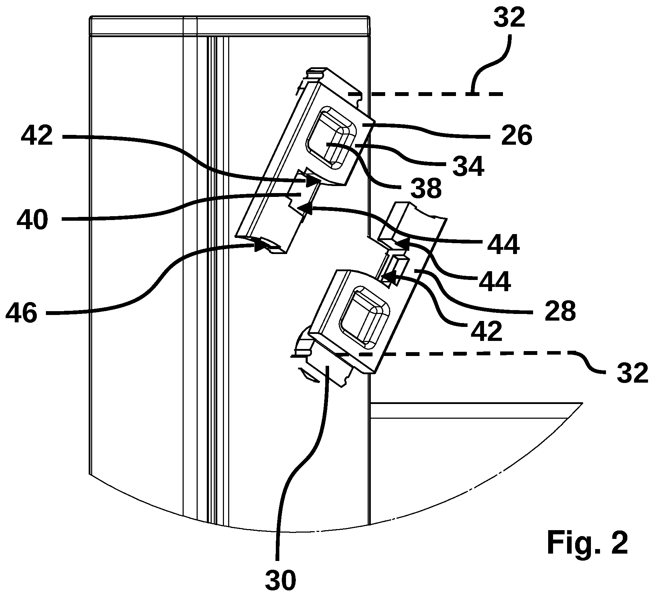

Die Abmessungen der Vorsprünge 30 sind so gewählt, dass beide in Löcher 16 eingeführt werden können, wenn das zugehörige Profilteil etwas abgekippt wird. Der Vorsprung 30 wird insofern erst in das betreffende Loch 16 eingeführt, und dann wird das Profilteil im Übrigen in Anlage mit dem Holm gebracht. Letzteres ist in der in Fig. 1 dargestellten Position der Profilteile 26 und 28 nicht möglich. Vielmehr müssen die Profilteile gegeneinander verschwenkt werden, wie es aus Fig. 2 ersichtlich ist.

Im Vergleich mit Fig. 1 sind die Profilteile 26 und 28 je im Uhrzeigersinn verschwenkt. Der Schwenkwinkel beträgt im dargestellten Ausführungsbeispiel etwa 20 Grad, kann aber beliebig gewählt werden.

Jedes Profilteil 26 und 28 ist um eine Achse 32 schwenkbar. Die Achse ist zugleich die Achse des betreffenden Lochs 16, in die der Vorsprung 30 eingesteckt ist. Die Profilteile 26 und 28 weisen im Querschnitt eine T-Form auf. Ein Querschenkel 34 des T ist je breiter als der Vorsprung 30 und ein Mittelschenkel 36 des T, der aus Fig. 1 ersichtlich ist.

Nachfolgend wird das Profilteil 26 beschrieben. Anschließend an den Vorsprung 30 erstreckt sich der Querschenkel 34 in seiner vollen Breite. Dort ist eine Ausnehmung 38 ersichtlich, die aus Gründen der Materialersparnis so realisiert ist, aber keine besondere technische Funktion hat. Anschließend an diesen Bereich ist ein seitlicher Rücksprung 40 vorgesehen. Dieser ist an einer konvexen Fläche 42 ausgebildet, deren Radius dem Abstand zur Achse 32 des Profilteils 26 entspricht. Der Rücksprung 40 endet an einer geraden Fläche 44. An dieser springt das Profilteil 26 mit seinem Querschenkel 34 nicht bis zur Maximalbreite des Querschenkels 34 vor, sondern nur etwa bis zur Hälfte von dessen Breite.

An dieser Stelle endet auch der Mittelschenkel 36 an einer Endfläche 45, die besser aus Fig. 1 ersichtlich ist. Von dieser Stelle ausgehend verläuft der Querschenkel 34 bis zu einer Abschlussfläche 46. Diese ist konkav gekrümmt. Der Radius entspricht wiederum dem Abstand zur Achse 32, allerdings zu der Achse des gegenüberliegenden Profilteils 28. Diese besondere Ausgestaltung der Profilteile 26 und 28 erlaubt es, dass beide aufeinander zu geschwenkt werden und dann eine sichere Verankerung und Lagerung an den

Löchern 16 des Holmes 12 für die Verbindungsstrebe 18 bilden.

Der aufeinander zu geschwenkte Zustand der Profilteile 26 und 28 ist aus Fig. 3 ersichtlich. Gemäß der Darstellung dort greifen die Rücksprungbereiche 40 ineinander ein, und die je oben beschriebenen Flächen, insbesondere auch die konvexen und die konkaven Flächen 42 und 46, liegen aneinander an. Dies gilt auch für die Endflächen 45, die ebenfalls aneinander anliegen.

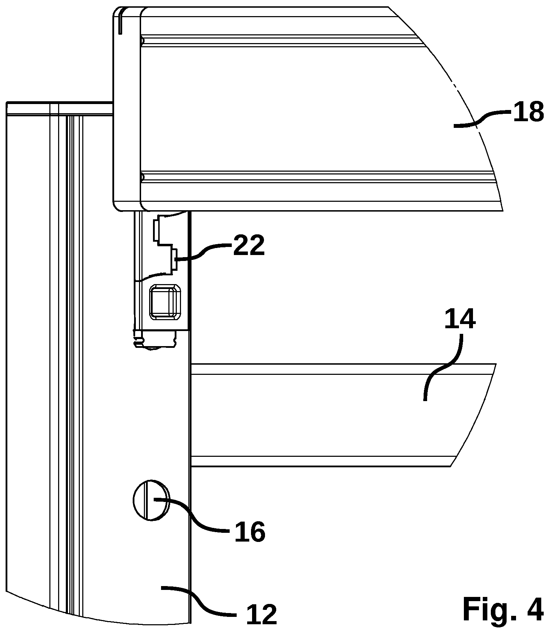

Der Querschenkel 34 und der Mittenschenkel 36 weisen auch parallel zum Holm 12 verlaufende Flächen auf. Hierzu gehört eine obere Abschlussfläche 47. Diese ist je an den Profilteilen 26 und 28 ausgebildet, und beide Abschlussflächen 47 verlaufen in dem in Fig. 4 dargestellten, montierten Zustand bündig zueinander.

Bündig zueinander verlaufen auch die der Abschlussfläche 47 an dem Querschenkel 34 gegenüberliegenden Querflächen 49 der beiden Profilteile 26 und 28, und auch die sonstigen Flächen der beiden Profilteile 26 und 28, die miteinander fluchten. Ebenso bündig zueinander erstrecken sich Seitenflächen 43 der Querschenkel 34 der Profilteile 26 und 28. Wie aus Fig. 4 ersichtlich ist, lässt sich die Verbindungsstrebe 18 mit der Aufnahmevorrichtung 20 von oben auf das Hinterschnittprofil 22 aufsetzen und aufschieben.

Die aufgeschobene Position ist aus Fig. 5 ersichtlich. Am unteren Ende der Aufnahmevorrichtung 20 sind Rastzungen 50 vorgesehen, die an nicht dargestellten Kerben des Querschenkels 34 des Profilteils 26 eingreifen und die Verbindungsstrebe 18 eingerastet auf dem Holm 12 halten. Es ist auch ersichtlich, dass die Verbindungsstrebe 18 an ihren beiden Stirnseiten 51 und 53 je eine Aufnahmevorrichtung 20 trägt. An den oberen Enden der Aufnahmevorrichtungen 20 bildet diese einen Anschlag 55 aus, der am Hinterschnittprofil 22 anschlägt und die Weiterbewegung der Strebe 18 nach unten verhindert.

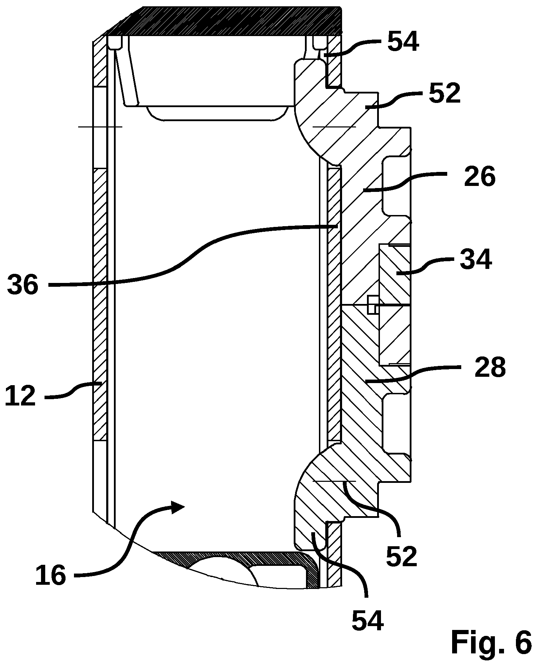

Aus Fig. 6 ist das Hinterschnittprofil 22 aufgenommen an dem Holm 12 ersichtlich. Die Vorsprünge 30 durchtreten je einander benachbarte Löcher 16. Die Vorsprünge 30 weisen je einen Mittenbereich 52 und einen Endbereich 54 auf. Der Mittenbereich 52 hat einen etwas kleineren Durchmesser als das Loch 16. Der Endbereich 54 springt nach oben vor, bzw. nach unten beim Profilteil 28. Er hintergreift die Wand des Holms und bildet insofern eine Sperrzunge.

Der Bereich 54 liegt innen an dem Holm 12 an und der Mittelschenkel 36 liegt außen an dem Holm an. Insofern entspricht die Höhe des Mittenbereich 52 im Wesentlichen der Wandstärke des Holms 12.

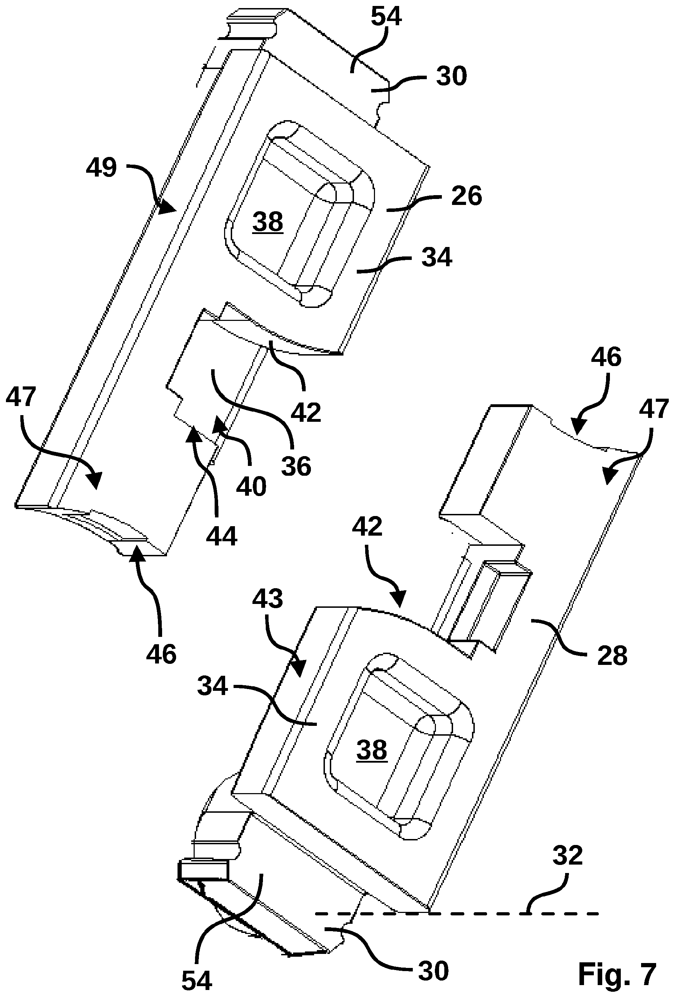

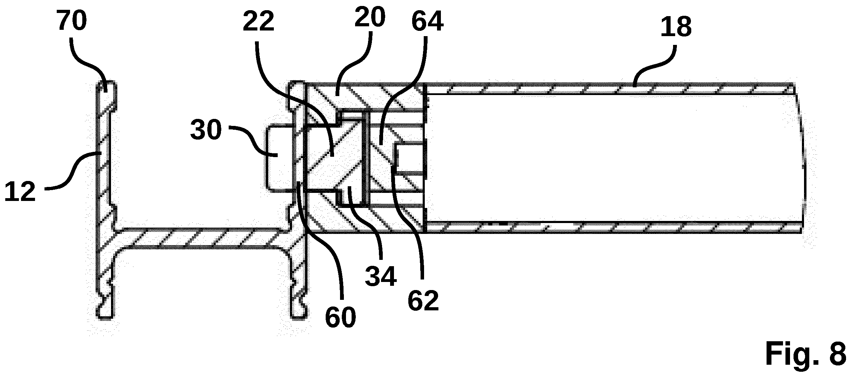

Fig. 7 zeigt eine perspektivische Ansicht der beiden Profilteile 26 und 28. Gleiche Bezugszeichen entsprechen hier wie auch in den weiteren Figuren gleichen Teilen. Bei der Ausführungsform gemäß Fig. 7 ist der Vorsprung 30 der beiden Profilteile 26 und 28 etwas anders geformt. Er durchtritt jedoch jedenfalls die aus Fig. 8 ersichtliche Wand 60 des Holms 12. Hierzu weist der Vorsprung 30 einen kleineren Durchmesser als die Ausnehmung 16 in der Wand 60 auf.

Der Mittenbereich 52 des Vorsprungs 30 ist aus Fig. 7 nicht unmittelbar ersichtlich, erstreckt sich jedoch zwischen dem Endbereich 54 und dem ebenfalls nicht ersichtlichen Mittelschenkel 36, vergleiche Fig. 6. Wie zuvor erläutert, hintergreift der Endbereich 54 des Vorsprungs 30 die Wand 60 des Holms 12. Der Mittelschenkel 36 liegt außen an der Wand 60 an, und durch das Verschwenken der Profilteile 26 und 28 aufeinander zu wird ein fester Körper gebildet, der zudem fest in den einander benachbarten Löchern 16 des Holms 12 verankert ist.

Fig. 8 zeigt einen Schnitt durch eine an dem Holm 12 verankerte Verbindungsstrebe 18. An der Verbindungsstrebe 18 ist die Aufnahmevorrichtung 20 angebracht, beispielsweise durch eine Verschraubung. Die Verschraubung 62 ist in Fig. 8 nicht dargestellt, erstreckt sich jedoch durch einen Mittenbereich 64 der Aufnahmevorrichtung 20.

In der Schnittansicht gemäß Fig. 8 weist die Aufnahmevorrichtung 20 einen C-förmigen Querschnitt auf. Demgegenüber weist das Hinterschnittprofil 22 einen T-förmigen Querschnitt auf. Das T passt genau in das C. Das Loch 16 ist aus Fig. 8 nicht ersichtlich, da es sich auf einer anderen horizontalen Ebene als der dortige Schnitt befindet. Jedoch ist der Vorsprung 30 dargestellt, der die Löcher 16 in der Wand 60 durchtritt. Der Holm weist einen an sich bekannten Doppel-T-Querschnitt auf. Dieser ist asymmetrisch, und auf der Seite der längeren Querschenkel 70 sind die Löcher 16 ausgebildet.

## Patentansprüche

1. Regalsystem, mit Holmen (12) und mit mindestens einer Verbindungsstrebe (18) für die Verbindung von zwei zueinander benachbarten Holmen, wobei die Verbindungsstrebe an ihren Stirnseiten Aufnahmevorrichtungen (24) aufweist, wobei
an den Holmen (12) des Regalsystems (10) ein im Wesentlichen parallel zum Holm verlaufendes Hinterschnittprofil (22) befestigt oder befestigbar ist,
wobei jedes Hinterschnittprofil (22) zwei oder mehr Profilteile (26,28) aufweist, welche voneinander lösbar und unter Bildung je zueinander bündiger Flächen (43-43;47-47;49-49) zusammenfügbar sind, wobei jedes Profilteil (26, 28) einen Vorsprung (30) aufweist, der in je ein Loch (16) eines der Holme (12) einführbar ist, wobei
die Aufnahmevorrichtung (20) der Verbindungsstrebe (18) auf das Hinterschnittprofil (22) in dessen zusammengefügtem Zustand aufschiebbar ist.

2. Regalsystem nach Anspruch 1, **dadurch gekennzeichnet, dass** die Aufnahmevorrichtungen (20) im Schnitt parallel zur Verbindungsstrebe (18) C-förmig ausgebildet sind und ein C-Profil bilden, und dass die Hinterschnittprofile (22) im Schnitt parallel zur Verbindungsstrebe (18) ein T-Profil bilden, und dass das C-Profil mit spielfreier Passung, ggf. mit einer Passung unter Vorspannung, auf das T-Profil passt.

3. Regalsystem nach Anspruch 1 oder 2, **dadurch gekennzeichnet, dass** die Aufnahmevorrichtungen (20) an einem Ende, parallel zum Holm betrachtet, einen Anschlag (55) aufweisen, mit welchem insbesondere eine Weiterbewegung des Hinterschnittprofils (22) in der Aufnahmevorrichtung (20) gesperrt ist.

4. Regalsystem nach einem der vorhergehenden Ansprüche, **dadurch gekennzeichnet, dass** die zwei oder mehr Profilteile (26,28) unter Bildung zueinander bündiger Abschlussflächen (47) und/oder zueinander bündiger Seitenflächen (43) und/oder zueinander bündiger Querflächen (49) zusammenfügbar sind, und/oder wobei sich die Flächen (43-43;47-47;49-49) parallel zum Holm (12) erstrecken.

5. Regalsystem nach einem der vorhergehenden Ansprüche, **dadurch gekennzeichnet, dass** die Profilteile (26,28) durch das Zusammenfügen der Profilteile (26,28) mit ihren Vorsprüngen (30) in Löchern (16) des Holmes (12), insbesondere benachbarten Löchern, fixierbar sind.

6. Regalsystem nach einem der vorhergehenden Ansprüche, **dadurch gekennzeichnet, dass** die Profilteile (26,28) für das Zusammenfügen und für das Lösen gegeneinander verschwenkbar sind, insbesondere jedes Profilteil (26,28) um den Vorsprung (30) und um eine Achse (32), die sich quer zum Holm (12) erstreckt.

7. Regalsystem nach einem der vorhergehenden Ansprüche, **dadurch gekennzeichnet, dass** jedes Profilteil (26,28) eine konvexe Fläche (42) und eine von der konvexen Fläche beabstandete konkave Fläche (46) aufweist, und dass die konvexe Fläche eines Profilteiles (26) einen Krümmungsradius aufweist, der dem Krümmungsradius der konkaven Fläche des anderen Profilteiles (28) entspricht.

8. Regalsystem nach einem der vorhergehenden Ansprüche, **dadurch gekennzeichnet, dass** die Profilteile (26,28) Klemmelemente aufweisen, über welche sie aneinander einrasten, und dass die Profilteile unter Überwindung der Rastkraft voneinander trennbar sind.

9. Regalsystem nach einem der vorhergehenden Ansprüche, **dadurch gekennzeichnet, dass** die Profilteile einander formgleich sind.

10. Regalsystem nach einem der vorhergehenden Ansprüche, **dadurch gekennzeichnet, dass** in dem aufgeschobenen Zustand der Aufnahmevorrichtung (20) auf das Hinterschnittprofil (22) das Lösen und/oder Verschwenken der Profilteile (26,28) gesperrt ist.

11. Regalsystem nach einem der vorhergehenden Ansprüche, **dadurch gekennzeichnet, dass** der Vorsprung (30) aus einem insbesondere runden und flachzylindrischen zapfförmigen Mittenbereich (52) und einem sich aus diesem heraus erstreckenden und für das Hintergreifen der Wand des Holms (12) bestimmten sperrzungenartigen Endbereich (54) besteht.

12. Regalsystem nach Anspruch 11, **dadurch gekennzeichnet, dass** die Sperrzunge (54) Abmessungen aufweist, die kleiner als der Durchmesser des Lochs (16) sind, und dass die Sperrzunge endseitig gebogen ist, insbesondere halbkreisförmig ausläuft.

13. Regalsystem nach einem der vorhergehenden Ansprüche, **dadurch gekennzeichnet, dass** der Vorsprung (30) bei Schrägstellung des Profilteiles (26,28) zum Holm (12) in das Loch (16) einführbar ist und aus diesem herausziehbar ist und bei zum Holm paralleler Ausrichtung des Profilteiles (26,28) das Einführen und das Herausziehen gesperrt ist.

14. Regalsystem nach einem der vorhergehenden Ansprüche, **dadurch gekennzeichnet, dass** die Aufnahmevorrichtung (20) mindestens eine Rastzunge (50) aufweist, die in eine Rastkerbe des Hinterschnittprofils (26, 28) eingreift und das Lösen der Aufnahmevorrichtung (22) von dem Hinterschnittprofil (22) nur unter Überwindung einer Rastkraft ermöglicht.

15. Regalsystem, mit mindestens zwei Regalsegmenten mit Holmen und mit mindestens einer Verbindungsstrebe für die Verbindung von zwei zueinander benachbarten Regalsegmenten, wobei die Verbindungsstrebe an einer ersten Stirnseite eine erste Aufnahmevorrichtung und an einer zweiten Stirnseite eine zweite Aufnahmevorrichtung aufweist, wobei
einem der Holme (12) des ersten Regalsegments ein im Wesentlichen parallel zum Holm verlaufendes Hinterschnittprofil (22) befestigt oder befestigbar ist, wobei an einem der Holme (12) des zweiten Regalsegment ein im Wesentlichen parallel zum Holm (12) verlaufendes Hinterschnittprofil (22) oder befestigbar ist,
wobei jedes Hinterschnittprofil (22) zwei oder mehr Profilteile (26, 28) aufweist, welche voneinander lösbar und unter Bildung je zueinander bündiger Flächen zusammenfügbar sind, wobei jedes Profilteil (26, 28) einen Vorsprung (30) aufweist, der in je ein Loch (16) eines der Holme (12) einführbar ist,
wobei die Verbindungsstrebe (18) bei in einem vorgegebenen Abstand nebeneinander stehendem ersten und zweiten Regalsegment mit beiden Aufnahmevorrichtungen (22) gleichzeitig auf die beiden Hinterschnittprofile (22) aufschiebbar ist und in aufgeschobenem Zustand diese die Regalsegmente aneinander fixiert.

## Claims

1. Shelf system, comprising spars (12) and comprising at least one connecting strut (18) for connecting two spars adjacent to one another, wherein the connecting strut has receiving devices (24) on its front sides, wherein an undercut profile (22) running substantially parallel to the spar is fastened or can be fastened to the spars (12) of the shelf system (10), wherein each undercut profile (22) has two or more profile parts (26, 28) which can be detached from one another and can be joined together under the formation of surfaces (43-43; 47-47; 49-49) which are flush with one another, wherein each profile part (26, 28) has a projection (30) which can be inserted into a hole (16) of one of the spars (12), wherein the receiving device (20) of the connecting strut (18) can be pushed onto the undercut profile (22) in the joined-together state thereof.

2. Shelf system according to claim 1, **characterized in that** the receiving devices (20) are C-shaped in section parallel to the connecting strut (18) and form a C-profile, and **in that** the undercut profiles (22) form a T-profile in section parallel to the connecting strut (18), and **in that** the C-profile fits onto the T-profile with a clearance-free fit, if appropriate with a fit under prestress.

3. Shelf system according to claim 1 or 2, **characterized in that** the receiving devices (20) have, at one end, viewed parallel to the spar, a stop (55) with which, in particular, a further movement of the undercut profile (22) in the receiving device (20) is blocked.

4. Shelf system according to any one of the preceding claims, **characterized in that** the two or more profile parts (26, 28) can be joined together with the formation of end surfaces (47) which are flush with one another and/or side surfaces (43) which are flush with one another and/or transverse surfaces (49) which are flush with one another, and/or wherein the surfaces (43-43; 47-47; 49-49) extend parallel to the spar (12).

5. Shelf system according to any one of the preceding claims, **characterized in that** the profile parts (26, 28) can be fixed by joining together the profile parts (26, 28) with their projections (30) in holes (16) of the spar (12), in particular adjacent holes.

6. Shelf system according to any one of the preceding claims, **characterized in that** the profile parts (26, 28) can be pivoted with respect to one another for joining together and for detaching, in particular each profile part (26, 28) can be pivoted about the projection (30) and about an axis (32) which extends transversely to the spar (12).

7. Shelf system according to any one of the preceding claims, **characterized in that** each profile part (26, 28) has a convex surface (42) and a concave surface (46) spaced apart from the convex surface, and **in that** the convex surface of one profile part (26) has a radius of curvature which corresponds to the radius of curvature of the concave surface of the other profile part (28).

8. Shelf system according to any one of the preceding claims, **characterized in that** the profile parts (26, 28) have clamping elements via which they latch to one another, and **in that** the profile parts can be separated from one another by overcoming the latching force.

9. Shelf system according to any one of the preceding claims, **characterized in that** the profile parts are identical in shape to one another.

10. Shelf system according to any one of the preceding claims, **characterized in that**, in the pushed-on state of the receiving device (20) onto the undercut profile (22), the detachment and/or pivoting of the profile parts (26, 28) is blocked.

11. Shelf system according to any one of the preceding claims, **characterized in that** the projection (30) consists of an in particular round and flat-cylindrical pin-shaped central region (52) and a locking-tongue-like end region (54) which extends out of the latter and is intended for engaging behind the wall of the spar (12).

12. Shelf system according to claim 11, **characterized in that** the locking tongue (54) has dimensions which are smaller than the diameter of the hole (16), and **in that** the locking tongue is bent at the end, in particular ends in a semicircular manner.

13. Shelf system according to any one of the preceding claims, **characterized in that** the projection (30) can be inserted into the hole (16) and can be pulled out of the latter when the profile part (26, 28) is inclined with respect to the spar (12), and the insertion and the pulling out are blocked when the profile part (26, 28) is oriented parallel to the spar.

14. Shelf system according to any one of the preceding claims, **characterized in that** the receiving device (20) has at least one latching tongue (50) which engages in a latching notch of the undercut profile (26, 28) and enables the detachment of the receiving device (22) from the undercut profile (22) only by overcoming a latching force.

15. Shelf system, comprising at least two shelf segments comprising spars and comprising at least one connecting strut for connecting two shelf segments adjacent to one another, wherein the connecting strut has a first receiving device on a first front side and a second receiving device on a second front side, wherein an undercut profile (22) running substantially parallel to the spar is fastened or can be fastened to one of the spars (12) of the first shelf segment, wherein an undercut profile (22) running substantially parallel to the spar (12) is fastened or can be fastened to one of the spars (12) of the second shelf segment, wherein each undercut profile (22) has two or more profile parts (26, 28) which can be detached from one another and can be joined together with the formation of surfaces which are flush with one another, wherein each profile part (26, 28) has a projection (30) which can be inserted into a hole (16) of one of the spars (12), wherein the connecting strut (18) can be pushed onto the two undercut profiles (22) simultaneously with the first and second shelf segments standing next to one another at a predetermined distance with both receiving devices (22) and, in the pushed-on state, fixes the shelf segments to one another.

## Revendications

1. Système de rayonnage avec des montants (12) et avec au moins une jambe de force de liaison (18) pour la liaison de deux montants voisins l'un de l'autre, sachant que la jambe de force de liaison comporte sur ses faces avant des dispositifs de logement (24),
sachant qu'un profilé à contre-dépouille (22) passant pour l'essentiel parallèlement au montant est fixé ou peut être fixé sur les montants (12) du système de rayonnage (10),
sachant que chaque profilé à contre-dépouille (22) comporte deux parties profilées (26, 28) ou plus, lesquelles peuvent être assemblées de façon amovible et en formant respectivement des surfaces affleurantes les unes aux autres (43-43, 47-47, 49-49), sachant que chaque partie profilée (26, 28) comporte une saillie (30), qui peut être introduite à chaque fois dans un trou (16) d'un des montants (12),
sachant que le dispositif de logement (20) de la jambe de force de liaison (18) peut être glissé sur le profilé à contre-dépouille (22) à l'état assemblé de celui-ci.

2. Système de rayonnage selon la revendication 1, **caractérisé en ce que** les dispositifs de logement (20) sont constitués en forme de C, en coupe parallèlement à la jambe de force de liaison (18) et forment un profilé en C et **en ce que** les profilés à contre-dépouille (22) forment en coupe parallèlement à la jambe de force de liaison (18) un profil en T et **en ce que** le profilé en C s'adapte au profil en T avec ajustement sans jeu, le cas échéant avec un ajustement sous précontrainte.

3. Système de rayonnage selon la revendication 1 ou 2, **caractérisé en ce que** les dispositifs de logement (20) comportent à une extrémité, vus parallèlement au montant, une butée (55), avec laquelle en particulier un déplacement ultérieur du profilé à contre-dépouille (22) est bloqué dans le dispositif de logement (20).

4. Système de rayonnage selon l'une quelconque des revendications précédentes, **caractérisé en ce que** les deux parties profilées ou plus (26, 28) peuvent être assemblées en formant des surfaces de fermeture affleurantes entre elles (47) et/ou des surfaces latérales affleurantes entre elles (43) et/ou des surfaces transversales (49) affleurantes entre elles (43-43, 47-47, 49-49) parallèlement au montant (12).

5. Système de rayonnage selon l'une quelconque des revendications précédentes, **caractérisé en ce que** les parties profilées (26, 28) peuvent être fixées par l'assemblage des parties profilées (26, 28) avec leurs saillies (30) dans les trous (16) du montant (12), en particulier les trous voisins.

6. Système de rayonnage selon l'une quelconque des revendications précédentes, **caractérisé en ce que** les parties profilées (26, 28) peuvent être pivotées l'une contre l'autre pour l'assemblage et pour le démontage, en particulier chaque partie profilée (26, 28) autour de la saillie (30) et autour d'un axe (32), qui s'étend transversalement au montant (12).

7. Système de rayonnage selon l'une quelconque des revendications précédentes, **caractérisé en ce que** chaque partie profilée (26, 28) comporte une surface convexe (42) et une surface concave (46) à distance de la surface convexe et **en ce que** la surface convexe d'une partie profilée (26) comporte un rayon de courbure, qui correspond au rayon de courbure de la surface concave de l'autre partie profilée (28).

8. Système de rayonnage selon l'une quelconque des revendications précédentes, **caractérisé en ce que** les parties profilée (26, 28) comportent des éléments de serrage par le biais desquels elles s'enclenchent l'une contre l'autre et **en ce que** les parties profilées peuvent être séparées l'une de l'autre en surmontant la force d'enclenchement.

9. Système de rayonnage selon l'une quelconque des revendications précédentes, **caractérisé en ce que** les parties profilées sont de forme identique entre elles.

10. Système de rayonnage selon l'une quelconque des revendications précédentes, **caractérisé en ce que** la séparation et/ou le pivotement des parties profilées (26, 28) sur le profilé à contre-dépouille (22) est bloqué à l'état glissé du dispositif de logement (20).

11. Système de rayonnage selon l'une quelconque des revendications précédentes, **caractérisé en ce que** la saillie (30) est composée d'une zone centrale (52) en forme de tenon en particulier ronde et cylindrique plate et d'une zone finale (54) s'étendant de celle-ci et en forme de languette de blocage destinée à l'engagement par l'arrière de la paroi du montant (12).

12. Système de rayonnage selon la revendication 11, **caractérisé en ce que** la languette de blocage (54) comporte des dimensions qui sont plus petites que le diamètre du trou (16) et **en ce que** la languette de blocage est courbée en extrémité, se termine en particulier en forme de demi-cercle.

13. Système de rayonnage selon l'une quelconque des revendications précédentes, **caractérisé en ce que** la saillie (30) peut être introduite dans le trou (16) lors de la position inclinée de la partie profilée (26, 28) par rapport au montant (12) et peut être retirée de celui-ci et l'introduction et l'enlèvement sont bloqués lors d'une orientation parallèle au montant de la partie profilée (26, 28).

14. Système de rayonnage selon l'une quelconque des revendications précédentes, **caractérisé en ce que** le dispositif de logement (20) comporte au moins une languette d'encliquetage (50), qui vient en prise dans un cran du profilé à contre-dépouille (26, 28) et permet la séparation du dispositif de logement (22) du profilé à contre-dépouille (22) uniquement en surmontant une force d'enclenchement.

15. Système de rayonnage avec au moins deux segments de rayonnage avec des montants et avec au moins une jambe de force de liaison pour la liaison de deux segments de rayonnage voisins l'un de l'autre, sachant que la jambe de force de liaison comporte sur une première face avant un premier dispositif de logement et sur une deuxième face avant un deuxième dispositif de logement,
sachant qu'un profilé à contre-dépouille (22) passant pour l'essentiel parallèlement au montant (12) est fixé ou peut être fixé à un des montants (12) du premier segment de rayonnage,
sachant qu'un profilé à contre-dépouille (22) passant pour l'essentiel parallèlement au montant est fixé ou peut être fixé sur un des montants (12) du deuxième segment de rayonnage,
sachant que chaque profilé à contre-dépouille (22) comporte deux parties profilées (26, 28) ou plus, lesquelles peuvent être séparées l'une de l'autre et assemblées en formant respectivement des surfaces affleurantes entre elles,
sachant que chaque partie profilée (26, 28) comporte une saillie (30), qui peut être introduite à chaque fois dans un trou (16) d'un des montants (12),
sachant que la jambe de force de liaison (18) peut être coulissée simultanément sur les deux profilés à contre-dépouille (22) pour un premier et un deuxième segment de rayonnage avec les deux dispositifs de logement (22) se trouvant à une distance prédéfinie l'un de l'autre et celle-ci fixe à l'état glissé les segments de rayonnage l'un contre l'autre.
